# EUROPEAN PATENT APPLICATION

(11) **EP 4 815 100 A1**
(43) Date of publication of application: **30.09.2026**
(21) Application number: 26156165.8
(22) Date of filing: 03.02.2026
(51) Int. Cl.: H01M 10/42, H01M 50/507, H01M 50/249, B60K 1/00

(54) **VEHICLE BATTERY PACK**

(30) Priority: 26.03.2025 JP 2025052558
(71) Applicant: Toyota Jidosha Kabushiki Kaisha, Toyota-shi, Aichi-ken 471-8571 (JP)
(72) Inventor: KAWAMOTO, Naoya, TOYOTA-SHI, AICHI-KEN 471-8571 (JP); MARUHASHI, Motokuni, TOYOTA-SHI, AICHI-KEN 471-8571 (JP); KUMAZAWA, Kazuya, TOYOTA-SHI, AICHI-KEN 471-8571 (JP); KIMURA, Kenta, TOYOTA-SHI, AICHI-KEN 471-8571 (JP)
(74) Representative: Cabinet Beau de Loménie

(57) **Abstract**

A battery pack includes a battery, an internal battery device electrically connected to the battery, an upper-lower connecting busbar connecting the battery and the internal battery device, and a housing case housing the battery, the internal battery device, and the upper-lower connecting busbar. The internal battery device is disposed above the battery such that, when viewed from above, at least a portion of the internal battery device overlaps at least a portion of the battery. The upper-lower connecting busbar includes a lower busbar attached to the battery and an upper busbar attached to the internal battery device.

## Description

### 1. Field of the Invention

The present disclosure relates to vehicle battery packs.

### 2. Description of Related Art

Japanese Unexamined Patent Application Publication No. 2023-046719 (JP 2023-046719 A) discloses a vehicle battery pack including a plurality of battery stacks, an internal battery device that can function as a junction box or the like, a busbar connecting the battery stacks and the internal battery device, and a housing case that houses these components.

### SUMMARY OF THE INVENTION

An object of the present disclosure is to efficiently mount an internal battery device and to make it easier to connect a battery to the internal battery device.

A vehicle battery pack of a first aspect is a battery pack mounted on a vehicle. The battery pack includes: a battery; an internal battery device electrically connected to the battery; an upper-lower connecting busbar connecting the battery and the internal battery device; and a housing case housing the battery, the internal battery device, and the upper-lower connecting busbar. The internal battery device is disposed above the battery such that, when viewed from above, at least a portion of the internal battery device overlaps at least a portion of the battery. The upper-lower connecting busbar includes a lower busbar attached to the battery and an upper busbar attached to the internal battery device.

In this aspect, the battery pack includes: the battery; the internal battery device electrically connected to the battery; the upper-lower connecting busbar connecting the battery and the internal battery device; and the housing case housing the battery, the internal battery device, and the upper-lower connecting busbar. The internal battery device is disposed above the battery such that, when viewed from above, at least a portion of the internal battery device overlaps at least a portion of the battery.
With this configuration, the space above the battery can be used to mount the internal battery device.

In this aspect, the upper-lower connecting busbar includes the lower busbar attached to the battery and the upper busbar attached to the internal battery device.
Since the upper-lower connecting busbar is divided into the lower busbar and the upper busbar, it becomes easier to connect the battery to the internal battery device.

In an embodiment described below, the housing case includes a battery case and a device case. However, this aspect is not limited to this.
In the embodiment described below, the internal battery device is a junction block. However, this aspect is not limited to this.

According to a vehicle battery pack of a second aspect, in the first aspect, the lower busbar includes a battery-side connection portion connected to the battery, and a lower connector portion connected to the upper busbar. The upper busbar includes a device-side connection portion connected to the internal battery device, and an upper connector portion connected to the lower connector portion. The upper connector portion is connected to the lower connector portion from above.

In this aspect, the lower busbar includes the battery-side connection portion connected to the battery, and the lower connector portion connected to the upper busbar. The upper busbar includes the device-side connection portion connected to the internal battery device, and the upper connector portion connected to the lower connector portion.
The upper connector portion is connected to the lower connector portion from above.
This makes it easier to connect the upper connector portion to the lower connector portion.

According to a vehicle battery pack of a third aspect, in the second aspect, the lower connector portion and the upper connector portion are disposed rearward of the battery and the internal battery device so as not to overlap the battery and the internal battery device when viewed from above.

In this aspect, the lower connector portion and the upper connector portion are disposed rearward of the battery and the internal battery device so as not to overlap the battery and the internal battery device when viewed from above.
In this configuration, no space for arranging the lower connector portion and the upper connector portion is provided in a region that overlaps the battery or the internal battery device when viewed from above. Therefore, the battery and the internal battery device can be positioned close to each other in the up-down direction.

According to a vehicle battery pack of a fourth aspect, in the third aspect, the lower connector portion includes a fixed portion fixed to the housing case.

In this aspect, the lower connector portion includes the fixed portion fixed to the housing case.
This configuration reduces the likelihood that the portion of the lower busbar closer to the lower connector portion may become a free end.

According to a vehicle battery pack of a fifth aspect, in the third or fourth aspect, the battery includes a plurality of battery modules arranged in a vehicle width direction. Each of the battery modules includes a plurality of battery cells arranged in a vehicle front-rear direction. The number of the upper-lower connecting busbars provided is equal to the number of the battery modules.

In this aspect, the battery includes the battery modules arranged in the vehicle width direction. Each of the battery modules includes the battery cells arranged in the vehicle front-rear direction. The number of the upper-lower connecting busbars provided is equal to the number of the battery modules.
With this configuration, the battery modules can be efficiently connected to the internal battery device.

As described above, the present disclosure allows an internal battery device to be installed efficiently and makes it easier to connect a battery to the internal battery device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic side view of a vehicle on which a battery pack is mounted;
FIG. 2 is a schematic exploded sectional view illustrating a connection procedure of an upper-lower connecting busbar;
FIG. 3 is a schematic sectional view illustrating a state in which the upper-lower connecting busbar has been connected;
FIG. 4 is a plan view illustrating a battery case and a battery;
FIG. 5 is a plan view illustrating a state in which an internal battery device is housed in a device case lower portion; and

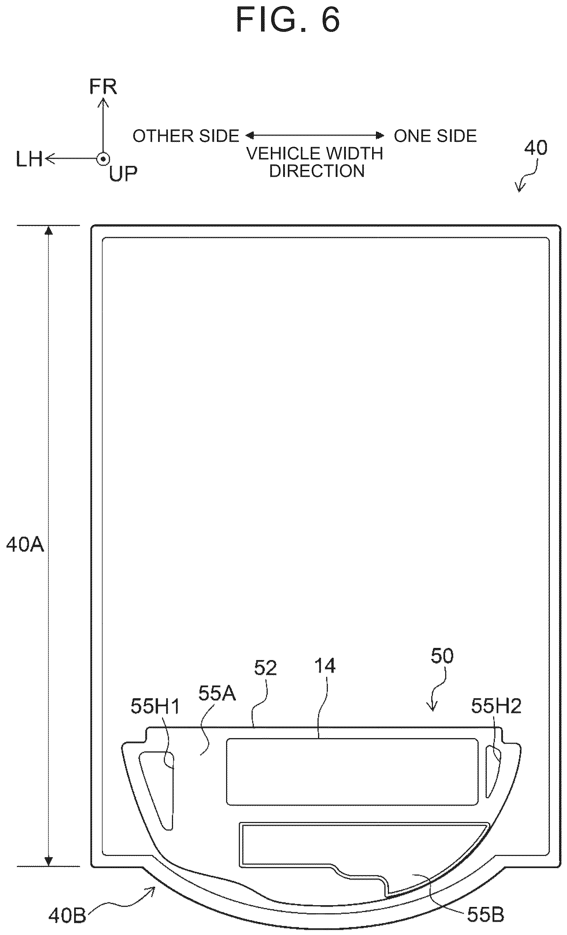

FIG. 6 is a plan view of the battery pack.

### DETAILED DESCRIPTION OF EMBODIMENTS

A preferred embodiment of the present disclosure will be described below. In the drawings, arrow FR indicates the forward direction of the vehicle, arrow UP indicates the upward direction of the vehicle, and arrow LH indicates the leftward direction in the vehicle width direction.

A battery pack 13 according to the present embodiment is disposed below the cabin of a vehicle 10.

The battery pack 13 includes a battery 20, an internal battery device 30 electrically connected to the battery 20, and housing cases 40, 50 respectively housing the battery 20 and the internal battery device 30.

The housing cases 40, 50 include a battery case 40 housing the battery 20, and a device case 50 housing the internal battery device 30.

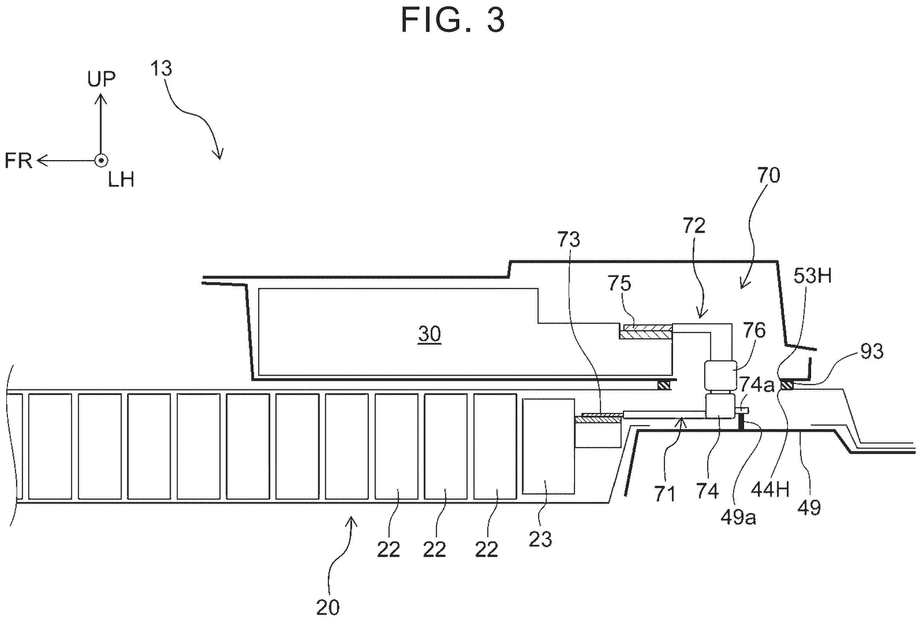

As shown in FIG. 3, the device case 50 is disposed above the battery case 40 such that, when viewed from above, the entire area of the device case 50 overlaps a portion of the battery case 40.

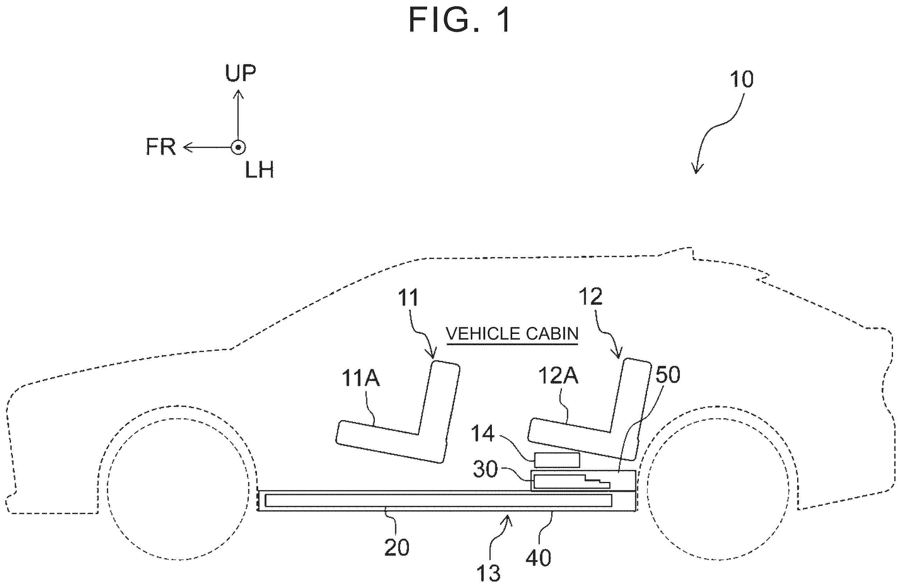

As shown in FIG. 1, a portion of the battery 20 overlaps at least a portion of a seat surface portion 11A of a front seat 11 when viewed from above, and another portion of the battery 20 overlaps at least a portion of a seat surface portion 12A of a rear seat 12 when viewed from above. The battery 20 includes a plurality of battery modules 21. In the present embodiment, the battery 20 includes four battery modules 21. The battery modules 21 are arranged side by side in the vehicle width direction. Each of the battery modules 21 includes a plurality of battery cells 22 arranged side by side in the vehicle front-rear direction.

The internal battery device 30 is a junction block. The internal battery device 30 includes electronic components (not shown) such as busbars, relays, and fuses. The relay includes a system main relay.

The vehicle 10 includes an external battery device 14 disposed outside the housing cases 40, 50 and electrically connected to the battery pack 13.

The external battery device 14 has a function to convert alternating current power supplied from an external source into direct current power usable by the battery 20 of the vehicle 10. This function is utilized when the battery pack 13 is charged at an appropriate voltage and current using a household power supply. The external battery device 14 also functions as a direct current-to-direct current (DC-to-DC) converter. The external battery device 14 is disposed above the device case 50 such that, when viewed from above, the entire area of the external battery device 14 overlaps a portion of the device case 50.

Features of each component will be described in more detail below.

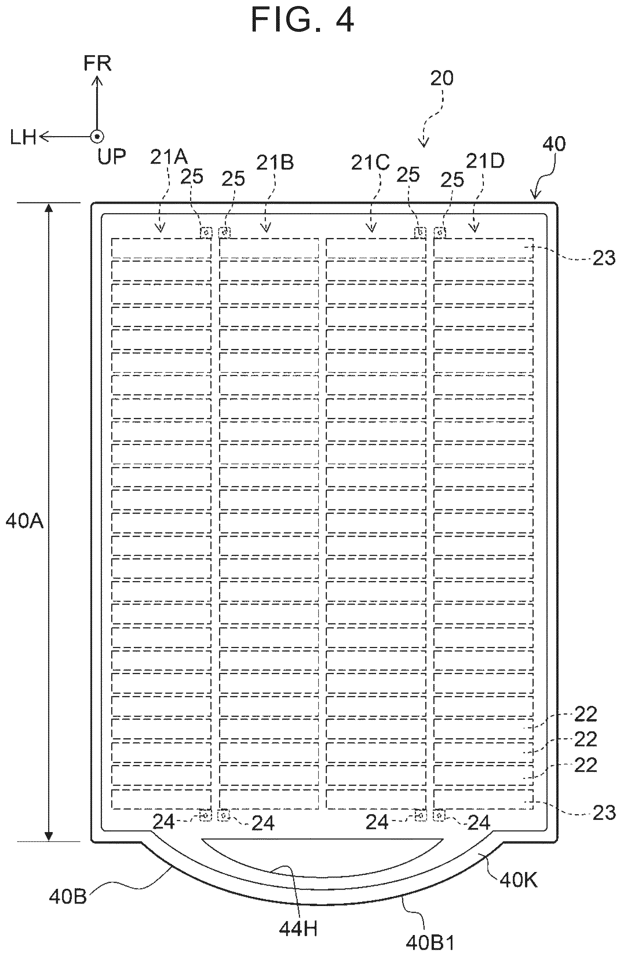

As shown in FIG. 4, each battery module 21 included in the battery 20 includes a front terminal 25 and a rear terminal 24.

The front terminal 25 of a first battery module 21A and the front terminal 25 of a second battery module 21B are connected via a busbar (not shown). The front terminal 25 of a third battery module 21C and the front terminal 25 of a fourth battery module 21D are connected via a busbar (not shown).

The rear terminal 24 of each battery module 21 is electrically connected to the internal battery device 30 via an upper-lower connecting busbar 70 described later.

The rear terminal 24 is positioned rearward of the rearmost battery cell 22 among the battery cells 22 included in each battery module 21. Specifically, the rear terminal 24 is located rearward of a rear end member 23 of a pair of front and rear end members 23 included in each battery module 21. The front and rear end members 23 are members that restrain the battery cells 22 by clamping them from the front and rear in the vehicle front-rear direction.

The battery case 40 includes a battery case lower portion 41 and a battery case upper portion 42.

The battery case upper portion 42 includes an upper wall 44. The upper wall 44 covers the battery 20 from above. The upper wall 44 serves as a floor panel that constitutes part of the vehicle cabin floor. The upper wall 44 has an upper wall opening 44H extending through the upper wall 44.

The device case 50 includes a device case lower portion 51 and a device case upper portion 52. The device case lower portion 51 includes a lower wall 53 and a side wall 54.

The lower wall 53 has a lower wall opening 53H that is a hole extending through the lower wall 53. Through the upper wall opening 44H of the battery case upper portion 42 and the lower wall opening 53H of the device case lower portion 51, electrical connection is established between the battery 20 or other components inside the battery case 40 and the internal battery device 30 or other components inside the device case 50. The lower wall 53 holds the internal battery device 30 via a plurality of bosses (not shown) and fastening members (not shown) provided on the lower wall 53.

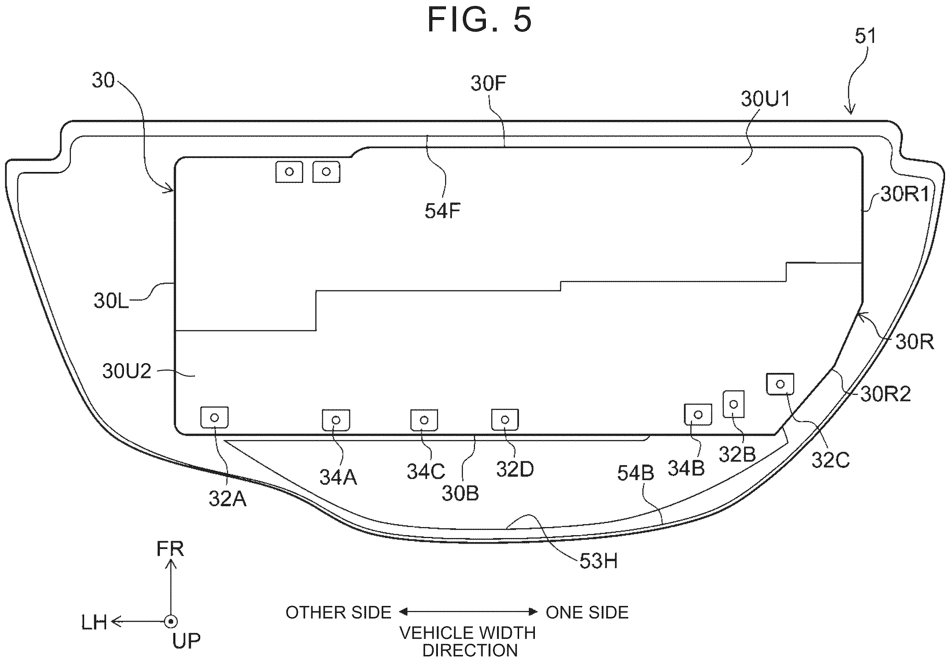

The side wall 54 includes a front wall 54F. As shown in FIG. 5, the front wall 54F extends linearly parallel to the vehicle width direction. The front wall 54F is inclined slightly forward as it extends upward. The side wall 54 also includes a rear wall 54B. The rear wall 54B is curved rearward in an approximately arcuate shape when viewed from above.

The internal battery device 30 includes a plurality of (four) battery connection portions 32A, 32B, 32C, and 32D to which a plurality of the upper-lower connecting busbars 70 described later are respectively connected. The battery connection portions 32A, 32B, 32C, and 32D are provided on the rear part of the internal battery device 30 when the internal battery device 30 is divided into a front part and a rear part. When features common to these battery connection portions are described without particular distinction, they are collectively simply referred to as the battery connection portion 32.

The internal battery device 30 has a front surface 30F, a rear surface 30B, a side surface 30R on one side in the vehicle width direction, and a side surface 30L on the other side in the vehicle width direction.

The rear surface 30B of the internal battery device 30 extends parallel to the vehicle width direction. The end of the rear surface 30B of the internal battery device 30 located on the one side in the vehicle width direction is located at a position farther toward the other side in the vehicle width direction than the end of the front surface 30F of the internal battery device 30 located on the one side in the vehicle width direction. The end of the rear surface 30B of the internal battery device 30 located on the other side in the vehicle width direction is located at the same position in the vehicle width direction as the end of the front surface 30F of the internal battery device 30 located on the other side in the vehicle width direction.

The side surface 30R on the one side in the vehicle width direction of the internal battery device 30 includes a front portion 30R1 and a rear portion 30R2. The front portion 30R1 of the side surface 30R extends parallel to the vehicle front-rear direction, and the rear portion 30R2 of the side surface 30R extends rearward in a direction inclined toward the other side in the vehicle width direction.

An upper surface 30U of the internal battery device 30 includes a first upper surface 30U1 and a second upper surface 30U2. The first upper surface 30U1 is the upper surface of the front part of the internal battery device 30, and the second upper surface 30U2 is the upper surface of the rear part of the internal battery device 30. The second upper surface 30U2 is positioned lower than the first upper surface 30U1.

The external battery device 14 is disposed directly above the device case 50. The external battery device 14 is electrically connected to the battery pack 13 via a harness or the like (not shown). This electrical connection is made through a charging opening 55H1 extending through the device case upper portion 52 in the up-down direction. The reference sign 55H2 denotes an opening for communication.

### Upper-Lower Connecting Busbar 70

The battery pack 13 includes an upper-lower connecting busbar 70 that electrically connects the battery 20 and the internal battery device 30.

**In** the present embodiment, a plurality of (four) upper-lower connecting busbars 70 is provided. The number of upper-lower connecting busbars 70 provided is thus equal to the number of battery modules 21 included in the battery 20.

Although not shown in the figures, the upper-lower connecting busbars 70 include a first upper-lower connecting busbar 70A, a second upper-lower connecting busbar 70B, a third upper-lower connecting busbar 70C, and a fourth upper-lower connecting busbar 70D.
The first upper-lower connecting busbar 70A electrically connects the rear terminal 24 of the first battery module 21A and the first battery connection portion 32A of the internal battery device 30.
The second upper-lower connecting busbar 70B electrically connects the rear terminal 24 of the second battery module 21B and the second battery connection portion 32B of the internal battery device 30.
The third upper-lower connecting busbar 70C electrically connects the rear terminal 24 of the third battery module 21C and the third battery connection portion 32C of the internal battery device 30.
The fourth upper-lower connecting busbar 70D electrically connects the rear terminal 24 of the fourth battery module 21D and the fourth battery connection portion 32D of the internal battery device 30.
When features common to these busbars are described without particular distinction, they are collectively simply referred to as the upper-lower connecting busbar 70.

The upper-lower connecting busbar 70 includes a lower busbar 71 attached to the battery 20 and an upper busbar 72 attached to the internal battery device 30.

The lower busbar 71 includes a battery-side connection portion 73 connected to the battery 20 and a lower connector portion 74 connected to the upper busbar 72.

The upper busbar 72 includes a device-side connection portion 75 connected to the internal battery device 30 and an upper connector portion 76 connected to the lower connector portion 74.

Specifically, the battery-side connection portion 73 of the lower busbar 71 is connected to the rear terminal 24 of the battery module 21. The device-side connection portion 75 of the upper busbar 72 is connected to the battery connection portion 32 of the internal battery device 30.

The upper connector portion 76 is connected to the lower connector portion 74 from above. In other words, the connecting direction between the lower connector portion 74 and the upper connector portion 76 is the up-down direction.

The lower connector portion 74 and the upper connector portion 76 are disposed rearward of the battery 20 and the internal battery device 30 so as not to overlap the battery 20 and the internal battery device 30 when viewed from above.

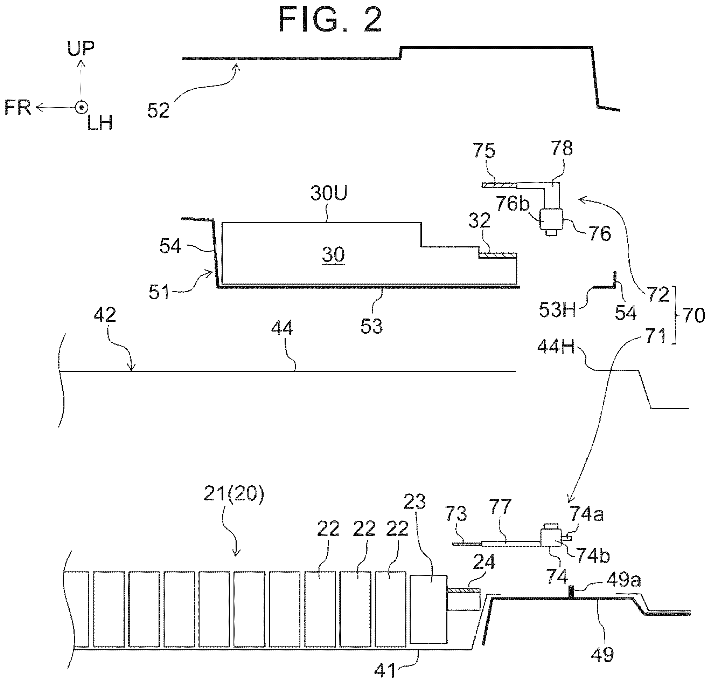

The rear terminal 24 and the battery connection portion 32 that are electrically connected by the upper-lower connecting busbar 70 are located at different positions in the vehicle width direction. That is, the upper-lower connecting busbar 70 is configured to electrically connect the rear terminal 24 and the battery connection portion 32 that are located at different positions in the vehicle width direction. FIGS. 2 and 3 are schematic diagrams. The battery-side connection portion 73 and the lower connector portion 74 are located at different positions in the vehicle width direction, and the device-side connection portion 75 and the upper connector portion 76 are also located at different positions in the vehicle width direction.

Each of the lower busbar 71 and the upper busbar 72 includes a busbar body formed of an electrically conductive material such as copper or aluminum, and an electrically insulating member that covers the busbar body. Specifically, in the lower busbar 71, the busbar body is not exposed at least in portions other than the battery-side connection portion 73. In the upper busbar 72, the busbar body is not exposed at least in portions other than the device-side connection portion 75.
In other words, the lower busbar 71 includes an electrically insulating lower busbar cover 77 that covers the busbar body. The lower connector portion 74 includes an electrically insulating lower connector housing 74b.
The upper busbar 72 includes an electrically insulating upper busbar cover 78 that covers the busbar body. The upper connector portion 76 includes an electrically insulating upper connector housing 76b.

The lower connector portion 74 and the upper connector portion 76 are configured such that, when connected to each other, the busbar body (live portion) is not exposed without the use of any additional components.

The lower connector portion 74 includes a fixed portion 74a fixed to the housing cases 40, 50. This configuration reduces the likelihood that the portion of the lower busbar 71 closer to the lower connector portion 74 may become a free end. Of the housing cases 40, 50, the portion to which the fixed portion 74a is fixed is the battery case 40, and more specifically, a connector block 49 of the battery case 40. The connector block 49 has a fixing portion 49a that fixes the fixed portion 74a. The upper connector portion 76 does not include a fixed portion like the fixed portion 74a because it is fixed by being connected to the lower connector portion 74.

The procedure for connecting the upper-lower connecting busbar 70 is generally as follows.
(1) The battery 20 is placed in the battery case lower portion 41.
(2) The lower busbar 71 is connected to the battery 20 and fixed to the connector block 49.
(3) The battery case lower portion 41 is closed with the battery case upper portion 42, and the device case lower portion 51 containing the internal battery device 30 is placed above the battery case 40.
(4) The upper busbar 72 is connected to the internal battery device 30 and to the lower busbar 71.

### Functions and Effects

Next, the functions and effects of the present embodiment will be described.

As shown in FIGS. 1, 2, and 3, in the present embodiment, the battery pack 13 includes the battery 20, the internal battery device 30 electrically connected to the battery 20, the upper-lower connecting busbar 70 connecting the battery 20 and the internal battery device 30, and the housing cases 40, 50 that house the battery 20, the internal battery device 30, and the upper-lower connecting busbar 70. The internal battery device 30 is disposed above the battery 20 such that, when viewed from above, at least a portion of the internal battery device 30 overlaps at least a portion of the battery 20.
Accordingly, the space above the battery 20 can be effectively utilized to mount the internal battery device 30.

In the present embodiment, the upper-lower connecting busbar 70 includes the lower busbar 71 attached to the battery 20 and the upper busbar 72 attached to the internal battery device 30.
Since the upper-lower connecting busbar 70 is divided into the lower busbar 71 and the upper busbar 72, it becomes easier to connect the battery 20 to the internal battery device 30.

In the present embodiment, the lower busbar 71 includes the battery-side connection portion 73 connected to the battery 20 and the lower connector portion 74 connected to the upper busbar 72. The upper busbar 72 includes the device-side connection portion 75 connected to the internal battery device 30 and the upper connector portion 76 connected to the lower connector portion 74.
The upper connector portion 76 is connected to the lower connector portion 74 from above. This makes it easier to connect the upper connector portion 76 to the lower connector portion 74.

In the present embodiment, the lower connector portion 74 and the upper connector portion 76 are disposed rearward of the battery 20 and the internal battery device 30 so as not to overlap the battery 20 and the internal battery device 30 when viewed from above.
In this configuration, no space for arranging the lower connector portion 74 and the upper connector portion 76 is provided in a region that overlaps the battery 20 or the internal battery device 30 when viewed from above. Therefore, the battery 20 and the internal battery device 30 can be positioned close to each other in the up-down direction.

In the present embodiment, the lower connector portion 74 includes the fixed portion 74a fixed to the housing cases 40, 50.
This configuration reduces the likelihood that the portion of the lower busbar 71 closer to the lower connector portion 74 may become a free end.

As shown in FIG. 4, in the present embodiment, the battery 20 includes the battery modules 21A, 21B, 21C, and 21D arranged side by side in the vehicle width direction. Each of the battery modules 21A, 21B, 21C, and 21D includes the battery cells 22 arranged side by side in the vehicle front-rear direction. Although not shown individually, the number of upper-lower connecting busbars 70 provided is equal to the number of battery modules 21A, 21B, 21C, and 21D.
Accordingly, the battery modules 21A, 21B, 21C, and 21D can be efficiently connected to the internal battery device 30.

Although the preferred embodiment of the present disclosure has been described above, the present disclosure is not limited to the foregoing description.

## Claims

1. A battery pack (13) configured to be mounted on a vehicle (10), the battery pack (13) comprising:
a battery (20);
an internal battery device (30) electrically connected to the battery (20);
an upper-lower connecting busbar (70) connecting the battery (20) and the internal battery device (30); and
a housing case (40,50) housing the battery (20), the internal battery device (30), and the upper-lower connecting busbar (70), wherein:
the internal battery device (30) is disposed above the battery (20) such that, when viewed from above, at least a portion of the internal battery device (30) overlaps at least a portion of the battery (20); and
the upper-lower connecting busbar (70) includes a lower busbar (71) attached to the battery (20) and an upper busbar (72) attached to the internal battery device (30).

2. The battery pack (13) according to claim 1, wherein:
the lower busbar (71) includes
a battery-side connection portion (73) connected to the battery (20), and
a lower connector portion (74) connected to the upper busbar (72);
the upper busbar (72) includes
a device-side connection portion (75) connected to the internal battery device (30), and
an upper connector portion (76) connected to the lower connector portion (74); and
the upper connector portion (76) is connected to the lower connector portion (74) from above.

3. The battery pack (13) according to claim 2, wherein the lower connector portion (74) and the upper connector portion (76) are disposed rearward of the battery (20) and the internal battery device (30) so as not to overlap the battery (20) and the internal battery device (30) when viewed from above.

4. The battery pack (13) according to claim 3, wherein the lower connector portion (74) includes a fixed portion (74a) fixed to the housing case (40,50).

5. The battery pack (13) according to claim 3, wherein:
the battery (20) includes
a plurality of battery modules (21) arranged in a vehicle width direction;
each of the battery modules (21) includes
a plurality of battery cells (22) arranged in a vehicle front-rear direction; and
the number of the upper-lower connecting busbars (70) provided is equal to the number of the battery modules .
